# EUROPÄISCHE PATENTSCHRIFT

(11) **EP 2 863 253 B1**
(45) Veröffentlichungstag und Bekanntmachung des Hinweises auf die Patenterteilung: **19.08.2015**
(21) Anmeldenummer: 13189372.9
(22) Anmeldetag: 18.10.2013
(51) Int. Cl.: G02B 27/14, G06K 7/10, H04N 7/18

(54) **Vorrichtung zum Umlenken und zur Verbreiterung des Sichtbereichs**
Device for deviating and for enlarging the field of view
Dispositif de déviation et d'élargissement d'un champ de vision

(43) Veröffentlichungstag der Anmeldung: 22.04.2015
(73) Patentinhaber: SICK AG, 79183 Waldkirch (DE)
(72) Erfinder: Anselment, Christoph, 79183 Waldkirch (DE); Weber, Helmut, 79312 Emmendingen (DE); Aschenbrenner, Johannes, 79312 Emmendingen (DE); Roser, Christofer, 78098 Triberg (DE); Schnurr, Norbert, 79189 Bad Krozingen (DE); Strohmeier, Dirk, 79104 Freiburg (DE)
(74) Vertreter: Hehl, Ulrich

(56) Entgegenhaltungen:
- CA-A1- 1 073 715
- JP-A- H08 171 151
- JP-A- 2004 070 302
- US-A- 5 708 470
- US-A1- 2012 261 473

## Beschreibung

Die Erfindung betrifft eine Vorrichtung zum Umlenken und zur Verbreiterung des Sichtbereichs sowie ein entsprechendes Verfahren zum Aufnehmen eines Bildes aus einem verbreiterten Sichtbereich nach den Oberbegriffen von Anspruch 1, 11 und 12.

In industriellen Anwendungen werden Kameras in vielfältiger Weise eingesetzt, um Objekteigenschaften automatisch zu erfassen, beispielsweise zur Inspektion oder Vermessung von Objekten. Dabei werden Bilder des Objekts aufgenommen und entsprechend der Aufgabe durch Bildverarbeitungsverfahren ausgewertet. Eine weitere Anwendung von Kameras ist das Lesen von Codes. Derartige kamerabasierte Codeleser lösen die noch weit verbreiteten Barcodescanner zunehmend ab. Mit Hilfe eines Bildsensors werden Objekte mit den darauf befindlichen Codes aufgenommen, in den Bildern die Codebereiche identifiziert und dann dekodiert. Kamerabasierte Codeleser kommen problemlos auch mit anderen Codearten als eindimensionalen Strichcodes zurecht, die wie ein Matrixcode auch zweidimensional aufgebaut sind und mehr Informationen zur Verfügung stellen.

Eine häufige Erfassungssituation ist die Montage der Kamera über einem Förderband, wo in Abhängigkeit der gewonnenen Objekteigenschaften weitere Bearbeitungsschritte eingeleitet werden. Solche Bearbeitungsschritte bestehen beispielsweise in der an das konkrete Objekt angepassten Weiterverarbeitung an einer Maschine, die auf geförderte Objekte einwirkt, oder in einer Veränderung des Objektstroms, indem bestimmte Objekte im Rahmen einer Qualitätskontrolle aus dem Objektstrom ausgeschleust werden oder der Objektstrom in mehrere Teilobjektströme sortiert wird.

Der Erfassungsbereich einer herkömmlichen Kamera reicht oft nicht aus, um die volle gewünschte Breite insbesondere eines Förderbandes abzudecken. Als ein bekannter Ausweg werden mehrere Kameras nebeneinander montiert. Das löst zwar das Problem, erfordert aber einen erheblichem Mehraufwand für die mehreren Kameras sowie deren Montage und Koordinierung.

Die EP 2 624 042 A2 offenbart ein System zur Sichtfelderweiterung einer Kamera. Dazu wird ein Modul mit vier Spiegeln auf die Kamera aufgesetzt. Zwei äußere Spiegel fangen das Licht aus einem verbreiterten Sichtbereich ein und lenken es über innere Spiegel auf den Bildsensor um. Jedes Paar aus äußerem und innerem Spiegel nimmt einen Streifen des Sichtbereichs auf. Dabei sind die Spiegel so verkippt, dass die beiden Streifen im Objektbereich nebeneinander liegen, um eine größere Breite abzudecken, auf dem Bildsensor jedoch übereinander abgebildet werden. Das Modul ist in erster Linie für die Erfassung eines Sichtbereichs ausgelegt, der sich in Richtung der optischen Achse der Kamera befindet. Es wird aber auch eine in ganz ähnlicher Weise auf vier Spiegeln beruhende Variante vorgestellt, bei welcher der Sichtbereich in einem 90°-Versatz erfasst wird. Nachteilig an dieser Lösung ist die aufwändige Spiegelkonstruktion.

Die US5708470 offenbart ein optisches Überwachungssystem mit einer Kamera und einer Spiegelanordnung mit mehreren hintereinander angeordneten Spiegeln. Diese Spiegel sind unterschiedlich verkippt und führen deshalb der Kamera mehrere gestaffelt hintereinander liegende Streifen des Sichtbereichs zu, die dann übereinander abgebildet werden.

Die US2012/0261473A1 zeigt eine Kamera, der ein beweglicher Spiegel zugeordnet ist, mit dessen Hilfe ein Sichtbereich abgescannt wird.

Die JP H08 171151A und die JP 2004 070302A offenbaren jeweils Spiegelanordnungen für stereoskopische Kameras, mit denen die für die Stereoskopie benötigte rechten und linken Aufnahmen übereinander auf demselben Film oder Bildsensor abgebildet werden.

Aus der CA 1073715 ist ein optisches System für die Mehrfachabbildung eines langgestreckten Objekts bekannt, bei dem mittels einer Nebeneinanderanordnung von zueinander verkippten Spiegeln versetzte Teilabschnitte des Objekts übereinander auf einem Bildsensor abgebildet werden.

Es ist außerdem bekannt, einem Codeleser eine einfache Umlenkhaube mit einem um 45° verkippten Spiegel vorzuordnen, um eine Erfassung in einem 90°-Winkel zu ermöglichen. Damit wird aber auch ausschließlich die Umlenkung erreicht, eine Sichtfelderweiterung ist dabei nicht vorgesehen.

Daher ist Aufgabe der Erfindung, den Sichtbereich einer Kamera zu verbreitern.

Diese Aufgabe wird durch eine Vorrichtung zum Umlenken und zur Verbreiterung des Sichtbereichs sowie ein entsprechendes Verfahren zum Aufnehmen eines Bildes aus einem verbreiterten Sichtbereich nach Anspruch 1, 11 und 12 gelöst. Die Vorrichtung geht von einer Bildumlenkung aus, umfasst also einen Spiegel, um einen nicht gerade nach Vorn längs der optischen Achse der Kamera, sondern dagegen seitlich um einen Winkel versetzten Sichtbereich zu erfassen. Dazu ist der Spiegel in einer Längsrichtung verkippt.

Nach einer ersten Alternative gemäß Anspruch 1 geht die Erfindung dann von dem Grundgedanken aus, zwei nebeneinander angeordnete, aber unterschiedlich verkippte Spiegelelemente zu verwenden. Der unterschiedliche Kippwinkel in Längsrichtung führt zu der gewünschten Sichtfeldverbreiterung, denn die beiden von den Spiegelelemen ten erfassten Teilbereiche ergänzen einander, um die geforderte Sichtfeldbreite zu erfassen. Das gelingt bis maximal zur doppelten Breite eines Teilbereichs, also der eigentlichen Sichtfeldbreite der Kamera, muss aber nicht optimal ausgenutzt werden, um einen Überlappungsbereich zu behalten. Durch zusätzliches Verkippen der Spiegelelemente in Querrichtung kann erreicht werden, dass die beiden Teilbereiche im Objektbereich direkt, d.h. ohne lateralen Versatz ineinander übergehen. Somit werden zwei im Objektbereich hintereinander liegende Teilbereiche in der Kamera übereinander erfasst.

Nach einer zweiten Alternative gemäß Anspruch 11 ist nur ein Spiegelelement vorgesehen, das mit Hilfe einer Kippvorrichtung zwischen zwei Positionen wechselt. In diesen beiden Positionen erfüllt es genau die gleiche Funktion wie jeweils eines der beiden nebeneinander angeordneten Spiegelelemente nach der ersten Alternative. Es werden also zeitlich versetzt jeweils beispielsweise alternierend der linke Teil und der rechte Teil des Sichtbereichs erfasst. Prinzipiell genügt dafür ein Verkippen nur in Längsrichtung. Indem zusätzlich in der Querrichtung verkippt wird, gibt es aber bei geeigneter Wahl dieses Verkippens keinen lateralen Versatz zwischen linkem Teil und rechtem Teil.

Die Erfindung hat den Vorteil, dass das Sichtfeld einer Kamera wesentlich verbreitert wird. Anschaulich gesprochen sorgt die erfindungsgemäße Vorrichtung dafür, dass aus einer Kamera mit einem üblichem Matrixsensor etwa im Format 4/3 oder 16/9 effektiv eine Kamera mit einem extremen Breitbildformat wird, beispielsweise um breitere Förderbänder über deren gesamte Breite abzudecken. Dabei ist die Vorrichtung mit ihren lediglich zwei Spiegeln sehr einfach aufgebaut und dadurch kostengünstig, wartungsarm und leicht zu justieren.

Das erste Spiegelelement und das zweite Spiegelelement sind bevorzugt in Längsrichtung um 20°-70°, insbesondere 40°-50° oder im Wesentlichen 45° gegenüber der optischen Achse der Kamera verkippt. Die Kamera wird dementsprechend um den doppelten Winkel gegenüber dem zu erfassenden Sichtbereich verkippt, und diese Ausrichtung hängt von der Anwendung ab. Häufig möchte man die Kamera gerade um 90° verkippen, d.h. sie wird beispielsweise mit ihrer optischen Achse parallel zu einem Förderband ausgerichtet, und die Vorrichtung sorgt für eine 90°-Umlenkung. Dabei sind Abweichungen von einigen Grad möglich. Beide Spiegelelemente können ohnehin wegen der gegenseitigen Verkippung in Längsrichtung nicht um genau 45°, sondern nur um ungefähr 45° gegenüber der Kamera verkippt sein. Der Verkippungswinkel kann weiterhin von geometrischen Gegebenheiten der Aufnahmesituation, wie der Objektentfernung und der gewünschten Sichtfeldbreite, sowie von dem geforderten Überlappungsgrad der beiden von den Spiegelelementen aufgenommenen Teilbereiche abhängen.

Das erste Spiegelelement und das zweite Spiegelelement sind vorzugsweise in Querrichtung um den gleichen Betrag, jedoch in unterschiedlicher Richtung verkippt. Dadurch sind die beiden Spiegelelemente in Querrichtung einander keilförmig zugewandt und nehmen lateral mittig gelegene Teilbereiche auf. Die Verkippung in Querrichtung muss diese Bedingungen nicht zwangsläufig erfüllen, aber das führt zu einer Art Schielen auf einen in Querrichtung versetzt gelegenen Sichtbereich.

Das erste Spiegelelement und das zweite Spiegelelement bilden bevorzugt Spiegelflächen gleicher Geometrie. Die Spiegel sind damit optisch gleichwirkend, noch bevorzugter auch konstruktiv gleichartige Spiegel, die sich nur in der Verkippung unterscheiden. Dadurch werden auch gleichartige Teilbereiche aufgenommen, was die Weiterverarbeitung der Bilddaten des Sichtbereichs erleichtert.

Die Vorrichtung weist bevorzugt ein drittes Spiegelelement auf, das gegenüber dem ersten Spiegelelement und dem zweiten Spiegelelement in Längsrichtung und in Querrichtung verkippt ist. Die Breite des Sichtfeldes wird dadurch nicht in zwei, sondern drei Abschnitte unterteilt, die im Objektbereich hintereinander und in der Kamera übereinander liegen. Das kann wahlweise genutzt werden, um ein noch breiteres Sichtfeld zu erfassen oder einen größeren Überlappungsbereich zu schaffen. Nach demselben Grundgedanken können auch noch mehr Spiegelelemente vorgesehen sein.

Die Vorrichtung weist bevorzugt ein Gehäuse mit einem Verbindungselement auf, um lösbar als Haube mit einer Kamera verbunden zu werden. Dadurch kann eine Kamera nachträglich für ein breiteres Sichtfeld umgerüstet werden. Alternativ zu einer lösbaren Verbindung kann die Vorrichtung auch schon ab Werk fest mit der Kamera verbunden werden, oder das Gehäuse der Vorrichtung ist sogar Teil eines Kameragehäuses.

In bevorzugter Weiterbildung ist eine Kamera vorgesehen, die mit einer erfindungsgemäßen Vorrichtung zur Sichtfeldverbreiterung ausgestattet ist.

Eine solche Kamera weist bevorzugt eine Beleuchtungseinrichtung auf, deren Licht über die Spiegelelemente in den Sichtbereich umgelenkt wird, um den Sichtbereich auszuleuchten. Die Beleuchtung nutzt also die gleichen Spiegelelemente wie das Empfangslicht. Dadurch wird auch für eine aktiv beleuchtete Kamera der Sichtbereich verbreitert, ohne dass an der Beleuchtung etwas verändert werden müsste. Die Vorrichtung sorgt mit der Sichtbereichsverbreiterung automatisch auch für dessen Ausleuchtung.

Die Kamera weist bevorzugt eine Auswertungseinheit auf, um einen über das erste Spiegelelement aufgenommenen Teilbereich des Sichtbereichs und einen über das zweite Spiegelelement aufgenommenen Teilbereich des Sichtbereichs zu einem gemeinsamen Bild des verbreiterten Sichtfeldes zu verbinden. Die auf dem Bildsensor der Kamera übereinander angeordneten Teilbilder werden dadurch zu einem gemeinsamen Bild verbunden. Die Kamera wird dadurch zu einer Kamera mit einem breiteren Bildformat, und der Anwender muss sich nach geeigneter Anfangsjustierung der Spiegelelemente um die Teilbereiche gar nicht weiter kümmern.

Die Kamera ist bevorzugt als kamerabasierter Codeleser mit einer Decodiereinheit zum Identifizieren von Codebereichen und zum Auslesen von Codeinhalten ausgebildet. Aufgrund der Sichtbereichsverbreiterung deckt dieser Codeleser ein breiteres Lesefeld ab, insbesondere ein breiteres Förderband

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine dreidimensionale Ansicht einer Vorrichtung zum Umlenken und zur Verbreiterung des Sichtbereichs einer Kamera;
- Fig. 2: eine dreidimensionale Ansicht ähnlich Figur 1, jedoch mit Beleuchtung;
- Fig. 3: eine schematische Schnittdarstellung einer Kamera mit einer Vorrichtung gemäß Figur 2;
- Fig. 4: ein beispielhafter verbreiterter Sichtbereich einer Kamera und dessen Abbildung in der Kamera; und
- Fig. 5: eine schematische Schnittdarstellung einer Kamera mit einer weiteren Ausführungsform einer Vorrichtung zum Umlenken und zur Verbreiterung des Sichtbereichs.

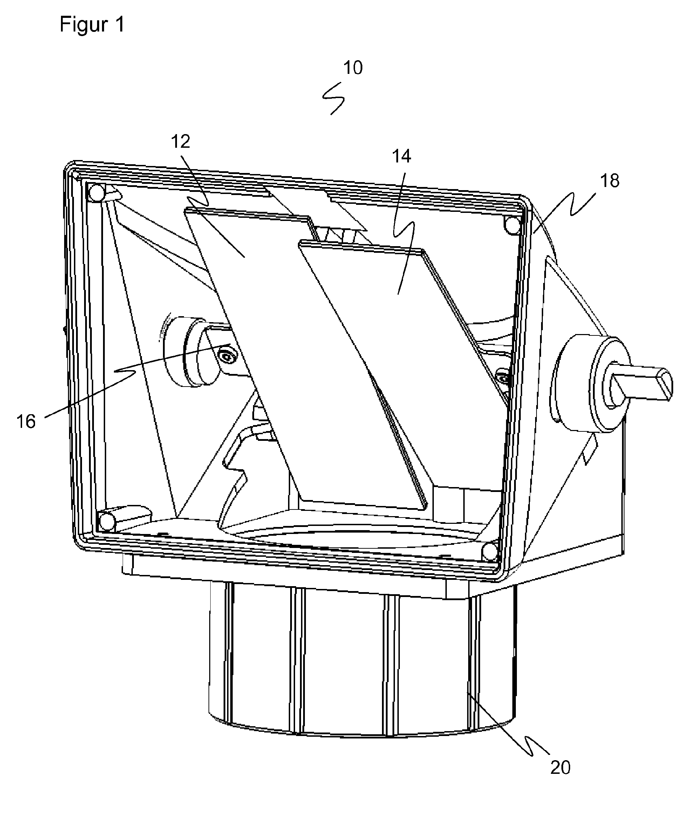

Figur 1 zeigt eine dreidimensionale Ansicht einer Bildumlenkhaube beziehungsweise Vorrichtung 10 zum Umlenken und zur Verbreiterung des Sichtbereichs einer Kamera. Die Vorrichtung 10 weist nebeneinanderliegend ein erstes Spiegelelement 12 und ein zweites Spiegelelement 14 auf. Die beiden Spiegelelemente 12, 14 sind an einer Welle 16 montiert, die wiederum in einem Gehäuse 18 gehaltert ist. Das Gehäuse 18 dient zugleich der mechanischen Stabilität und als optische Abschirmung. Im unteren Teil des Gehäuses 18 ist ein Verbindungselement 20 vorgesehen, um die Vorrichtung 10 mit einer Kamera zu verbinden, so dass deren Objektiv mit seiner optischen Achse auf die Spiegelelemente 12, 14 ausgerichtet ist. Die optische Achse verläuft in der Perspektive der Figur 1 von unten nach oben, wobei die Spiegelelemente 12, 14 für eine Bildumlenkung von etwa 90° sorgen, so dass der effektive Sichtbereich der Kamera oberhalb der Papierebene liegt.

Die Spiegelelemente 12, 14 können unabhängig voneinander in zwei Achsen verkippt werden. Deutlich in Figur 1 zu erkennen ist eine Verkippung in einer Längsrichtung. Der Kippwinkel beträgt in etwa 45°, um die gewünschte 90°-Bildumlenkung zu erreichen. Der Kippwinkel weicht jedoch von genau 45° ab, denn beide Spiegelelemente 12, 14 sind auch gegeneinander in Längsrichtung verkippt. Dadurch sind die Spiegelelemente 12, 14 auf Teilbereiche im Objektbereich ausgerichtet, die in der Perspektive der Figur 1 in unterschiedlichen Höhen liegen. In einer tatsächlichen Anwendung würde man die Vorrichtung 10 üblicherweise so ausrichten, dass die Höhenrichtung der Figur 1 einer zu erfassenden Breite beispielsweise eines Förderbandes entspricht. Die beiden Teilbereiche ergänzen einander und decken somit eine größere Breite ab. Der unterschiedliche Kippwinkel in Längsrichtung der beiden Spiegelelemente 12, 14 wird vorzugsweise in Abhängigkeit von einem Objektabstand auf die gewünschte zu erfassende Breite justiert. Ein gewisser Überlapp der Teilbereiche ist möglich und beispielsweise für das Zusammenfügen eines gemeinsamen Bildes (Stitching) sogar erwünscht.

Allerdings hätten die beiden Teilbereiche dann noch einen lateralen gegenseitigen Versatz. Deshalb sind die Spiegelelemente 12, 14 auch in einer Querrichtung senkrecht zu der Längsrichtung verkippt. Die beiden Spiegelelemente 12, 14 sind dazu zueinander geneigt und bilden einen Keil. Allerdings ist der Keilwinkel sehr klein und deshalb in Figur 1 kaum zu erkennen. Durch das Verkippen in Querrichtung werden die Teilbereiche so justiert, dass sie auf einer gemeinsamen Achse liegen, die entsprechenden Teilbilder also über die Breite des Sichtbereichs gerade ineinander übergehen. Damit wird ein kontinuierlicher Bereich quer zur Förderrichtung abgebildet.

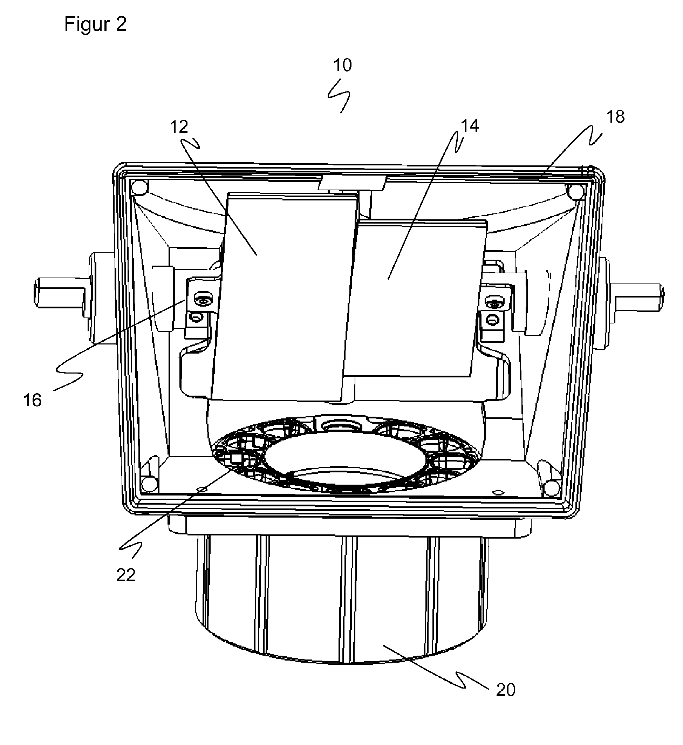

Figur 2 zeigt eine dreidimensionale Ansicht einer weiteren Ausführungsform der Vorrichtung 10. Wie in der gesamten Beschreibung bezeichnen dabei gleiche Bezugszeichen die gleichen Merkmale. Abgesehen von der etwas anderen Perspektive unterscheidet sich diese Darstellung von Figur 1 dadurch, dass zusätzlich eine Beleuchtungseinrichtung 22 vorgesehen ist, hier beispielhaft in Form von ringförmig um eine Öffnung für das Objektiv einer Kamera vorgesehenen LEDs. Das Licht dieser Beleuchtungseinrichtung 22 wird von der Vorrichtung 10 in genau der gleichen Weise zu dem Sichtbereich geleitet, wie auf dem umgekehrten Lichtweg der Sichtbereich der Kamera umgelenkt und verbreitert wird.

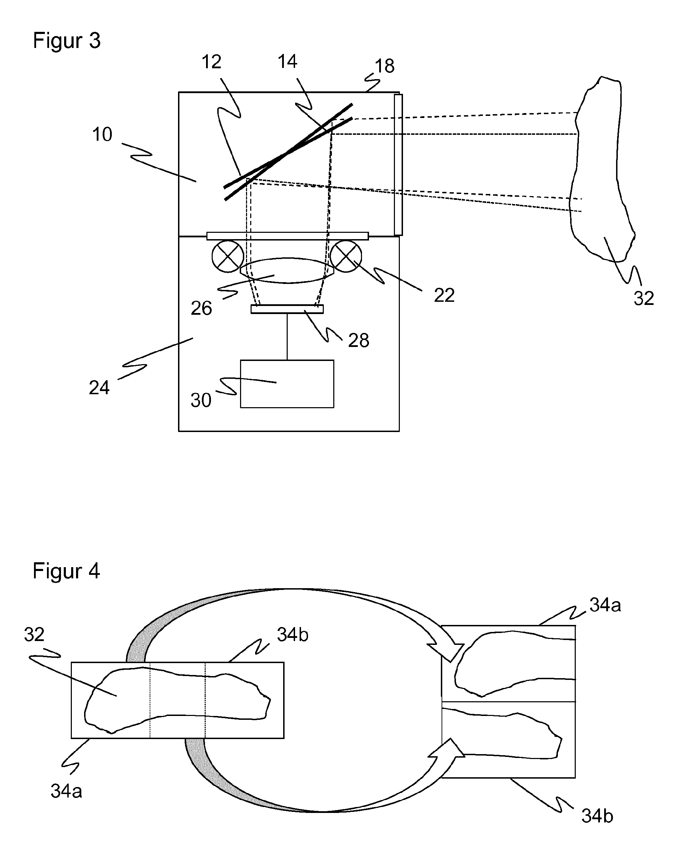

Figur 3 zeigt in einer schematischen Schnittansicht eine Kamera 24 mit einer Vorrichtung 10 zur Sichtfeldverbreiterung. Die Kamera 24 weist die Beleuchtungseinrichtung 22, ein Objektiv beziehungsweise eine Empfangsoptik 26, einen Bildsensor 28 mit matrixartig angeordneten lichtempfindlichen Empfangselementen und eine Steuer- und Auswertungseinheit 30 auf. Die Kamera 24 ist insbesondere ein kamerabasierter Codeleser, deren Auswertungseinheit 30 in aufgenommenen Bilddaten Codebereiche identifizieren und die Codeinhalte auslesen kann. Die Auswertungseinheit 30 ist zudem vorzugsweise in der Lage, mehrere aufgenommene Teilbereiche oder Bildstreifen zu einem gemeinsamen Bild zusammenzufügen.

Die Kamera 24 nimmt über die Spiegelelemente 12, 14 ein Objekt 32 in zwei Teilbereichen auf, wobei die jeweiligen Lichtwege über die beiden Spiegelelemente 12, 14 durch unterschiedliche Strichbreiten angedeutet sind. Der Versatz der entstehenden Teilbereiche auf dem Objekt 32 kann kleiner oder größer sein als dargestellt, dies hängt vom gegenseitigen Kippwinkel der Spiegelelemente 12, 14 und dem Abstand zu dem Objekt 32 ab. Die zusätzliche Verkippung der Spiegelelemente 12,14 ist in Figur 3 aufgrund der Schnittansicht nicht erkennbar. Sie führt dazu, dass die beiden Teilbereiche auf dem Objekt 32 in lateraler Richtung übereinstimmen, also in Figur 3 längs einer Senkrechten zur Papierebene.

Der Effekt der Vorrichtung 10 auf das Bild der Kamera 24 ist in Figur 4 beispielhaft illustriert. Links ist der Objektbereich dargestellt, wo die beiden Teilbereiche 34a-b aufgrund der Verkippung der Spiegelelemente 12, 14 in Längsrichtung zueinander versetzt nebeneinander liegen und somit eine größere Breite abdecken. In lateraler Richtung dagegen stimmen die Teilbereiche 34a-b aufgrund geeigneter Verkippung der Spiegelelemente 34a-b in Querrichtung überein, gehen also direkt ineinander über. In Summe decken die beiden Teilbereiche 34a-b ein verbreitertes Sichtfeld ab.

Im Bildbereich beziehungsweise auf dem Bildsensor 28 dagegen werden die Teilbereiche 34a-b übereinander abgebildet, wie rechts in Figur 4 dargestellt. Damit kann ein herkömmlicher Bildsensor 28 beziehungsweise eine Empfangsoptik 26 mit eher quadratischem und üblichen Bildverhältnis (aspect ratio) von beispielsweise 4/3 oder 16/9 eingesetzt werden und dennoch ein sehr breites Bildformat erzielt werden. Durch nachgelagerte Bildbearbeitung in der Auswertungseinheit 30 oder extern ist ohne weiteres möglich, die beiden Teilbereiche 34a-b nebeneinander zusammenzufügen. Andererseits ist auch denkbar, die in beiden Teilbereichen 34a-b abgebildeten Überlappungsbereiche so groß zu lassen, dass ein aufgenommener Code bekannter Größe stets vollständig in zumindest einem Teilbereich 34a-b erfasst ist. Dann ist ein Zusammenfügen zu einem homogenen Bild zur Decodierung gar nicht erforderlich.

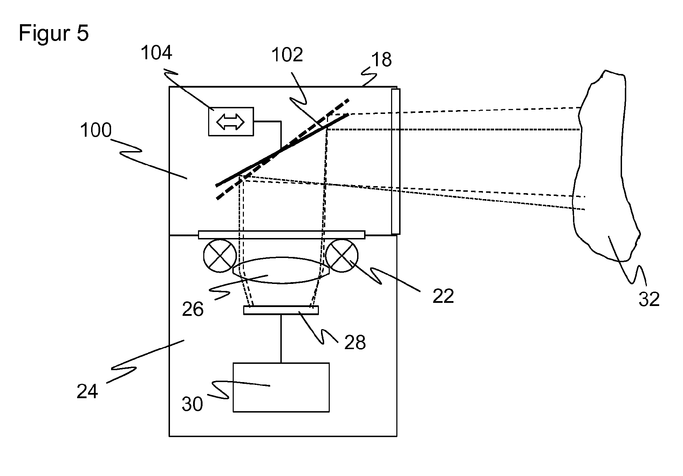

Figur 5 zeigt eine Schnittansicht einer Kamera 24 mit einer weiteren Ausführungsform einer Vorrichtung 100 zum Umlenken und zur Verbreiterung des Sichtbereichs der Kamera 24. Im Gegensatz zu den bisher beschriebenen Ausführungsformen ist hier nur ein Spiegelelement 102 vorgesehen, das allerdings mit Hilfe einer Kippeinheit 104 verkippt werden kann. Das ist durch jeweils eine Darstellung des Spiegelelements 102 mit durchgezogener und mit gestrichelter Linie angedeutet. Das Spiegelelement 102 wird folglich alternierend oder zyklisch zwischen zwei Endpositionen verkippt, wobei das Spiegelelement 102 im Wesentlichen in der einen Position so steht wie das erste Spiegelelement 12 und in der anderen Position wie das zweite Spiegelelement 14 der Ausführungsformen gemäß Figur 1 bis 3. Die beiden Teilbereiche 34a-b werden dann nicht gleichzeitig, sondern abwechselnd und zeitlich versetzt aufgenommen. Die Verkippung in Querrichtung kann etwas von derjenigen gemäß Figuren 1 bis 3 abweichen, um einen Fördervorschub zwischen zwei Aufnahmen auszugleichen. Es ist prinzipiell auch denkbar, das Spiegelelement 102 nur in Längsrichtung und nicht in Querrichtung zu verkippen. Dadurch wird das Sichtfeld ebenfalls verbreitert, jedoch verbleibt ein Versatz der Teilbereiche 34a-b in lateraler Richtung, also in Förderrichtung.

## Patentansprüche

1. Kamera (24) mit einer Vorrichtung (10) zum Umlenken und zur Verbreiterung des Sichtbereichs der Kamera (24), wobei die Vorrichtung (10) ein erstes Spiegelelement (12) und ein zweites Spiegelelement (14) aufweist, die in einer der optische Achse der Kamera (24) entsprechenden Längsrichtung und untereinander verkippt sind, um der Kamera (24) Licht aus einem bezüglich der optischen Achse seitlich gelegenen Sichtbereich zuzuleiten und mit den beiden Spiegelelementen (12, 14) in einander ergänzenden Teilbereichen (34a-b) eine geforderte Sichtfeldbreite zu erfassen,
**dadurch gekennzeichnet,**
**dass** das erste Spiegelelement (12) und das zweite Spiegelelement (14) nebeneinanderliegend an einer Welle (16) angeordnet sind und dass die Spiegelelemente (12, 14) zusätzlich in einer Querrichtung senkrecht zu der Längsrichtung zueinander geneigt sind, damit die im Objektbereich hintereinander liegenden Teilbereiche (34a-b) in der Kamera (24) übereinander erfasst werden, wobei die Kamera (24) eine Beleuchtungseinrichtung (22) aufweist, deren Licht über die Spiegelelemente (12, 14) in den Sichtbereich umgelenkt wird, um den Sichtbereich auszuleuchten.

2. Kamera (24) nach Anspruch 1,
wobei das erste Spiegelelement (12) und das zweite Spiegelelement (14) in Längsrichtung um 20°-70°, insbesondere 40°-50° oder im Wesentlichen 45° gegenüber der optischen Achse der Kamera (24) verkippt sind.

3. Kamera (24) nach Anspruch 1 oder 2,
wobei das erste Spiegelelement (12) und das zweite Spiegelelement (14) in Querrichtung um den gleichen Betrag, jedoch in unterschiedlicher Richtung verkippt sind.

4. Kamera (24) nach einem der vorhergehenden Ansprüche,
wobei das erste Spiegelelement (12) und das zweite Spiegelelement (14) Spiegelflächen gleicher Geometrie bilden.

5. Kamera (24) nach einem der vorhergehenden Ansprüche,
wobei die Vorrichtung (10) ein drittes Spiegelelement aufweist, das gegenüber dem ersten Spiegelelement (12) und dem zweiten Spiegelelement (14) in Längsrichtung und in Querrichtung verkippt ist.

6. Kamera nach einem der vorhergehenden Ansprüche,
wobei die Vorrichtung (10) ein Gehäuse (18) mit einem Verbindungselement (20) aufweist, über das die Vorrichtung (10) lösbar als Haube mit der Kamera (24) verbunden ist.

7. Kamera (24) nach einem der vorhergehenden Ansprüche,
die eine Auswertungseinheit (30) aufweist, um einen über das erste Spiegelelement (12) aufgenommenen Teilbereich (34a) des Sichtbereichs und einen über das zweite Spiegelelement (14) aufgenommenen Teilbereich (34b) des Sichtbereichs zu einem gemeinsamen Bild des verbreiterten Sichtfeldes zu verbinden.

8. Kamera (10) nach einem der vorhergehenden Ansprüche,
die als kamerabasierter Codeleser mit einer Decodiereinheit (30) zum Identifizieren von Codebereichen und zum Auslesen von Codeinhalten ausgebildet ist.

9. Verfahren zum Aufnehmen eines Bildes aus einem verbreiterten Sichtbereich mit einer Kamera (24), bei dem Licht aus einem bezüglich der optischen Achse seitlich gelegenen Sichtbereich über zwei Spiegelelemente (12, 14) der Kamera (24) zugeleitet wird, die in einer der optischen Achse der Kamera (24) entsprechenden Längsrichtung und untereinander verkippt sind, um mit den beiden Spiegelelementen (12, 14) in einander ergänzenden Teilbereichen (34a-b) eine geforderte Sichtfeldbreite zu erfassen,
**dadurch gekennzeichnet,**
**dass** die Spiegelelemente (12, 14) auf einer Welle (16) nebeneinander liegen und zusätzlich in einer Querrichtung senkrecht zu der Längsrichtung zueinander geneigt sind, und dass in dem Bild die beiden im Objektbereich hintereinander liegenden Teilbereiche (34a-b) über die Spiegelelemente (12, 14) gleichzeitig und übereinander liegend aufgenommen werden und dass der Sichtbereich von einer Beleuchtungseinrichtung (22) der Kamera (24) ausgeleuchtet wird, deren Licht über die Spiegelelemente (12, 14) in den Sichtbereich umgelenkt wird.

## Claims

1. Camera (24) with an apparatus (10) for deflecting and for widening a visual range of the camera, wherein the apparatus (10) has a first mirror element (12) and a second mirror element (14) which are tilted with respect to an optical axis of the camera (24) in a longitudinal direction and which are tilted relative to each other in order to guide light to the camera (24) from a visible range lying laterally with respect to the optical axis and in order to detect a required width of the visible range in combined part regions (34a-b) with the two mirror elements (12, 14),
**characterized in that**,
the first mirror element (12) and the second mirror element (14) are arranged next to each other at a shaft (16) and **in that** the mirror elements (12, 14) are additionally tilted in a transverse direction perpendicular to the longitudinal direction so that the part regions (34a-b) lying one behind the other in the object region are detected in the camera (24) on top of each other, wherein the camera (24) comprises an illumination apparatus (22) whose light is deflected via the mirror elements (12, 14) into the visible range in order to illuminate the visible range.

2. Camera (24) in accordance with claim 1,
wherein the first mirror element (12) and the second mirror (14) element are tilted with respect to the optical axis of the camera (24) in the longitudinal direction by 20° - 70°, especially 40° - 50° or primarily 45°.

3. Camera (24) in accordance with claim 1 or 2,
wherein the first mirror element (12) and the second mirror element (14) are tilted in the transverse direction by the same amount, but in different directions.

4. Camera (24) in accordance with any preceding claim,
wherein the first mirror element (12) and the second mirror element (14) form mirror surfaces having the same geometry.

5. Camera (24) in accordance with any preceding claim,
wherein the apparatus (10) has a third mirror element which is tilted with respect to the first mirror element (12) and with respect to the second mirror element (14) in the longitudinal direction and in the transverse direction.

6. Camera (24) in accordance with any preceding claim,
wherein the apparatus (10) has a housing (18) having a connection element (20) in order to be releasably connected to the camera (24) as a cover.

7. Camera (24) in accordance with any preceding claim,
which has an evaluation unit (30) in order to combine a first part region (34a) of the visible range recorded via the first mirror element (12) and a second part region (24b) of the visible range recorded via the second mirror element (14) to a common image of the widened visible range.

8. Camera (24) in accordance with any preceding claim,
which is configured as a camera-based code reader having a decoding unit (30) for the identification of code regions and for the read out of code contents.

9. A method for the recording of an image from a widened visible range using a camera (24) in which light is supplied to the camera (24) via two mirror elements (12, 14) from a visible range lying laterally with respect to the optical axis, wherein the mirror elements (12, 14) are tilted with respect to an optical axis of the camera (24) in a longitudinal direction and which are tilted relative to each other in order to detect a required width of the visible range in combined part regions (34a-b) with the two mirror elements (12, 14), **characterized in that**,
the mirror elements (12, 14) are arranged next to each other at a shaft (16) and are additionally tilted in a transverse direction perpendicular to the longitudinal direction and **in that** the part regions (34a-b) lying one behind the other in the object region are detected in the camera (24) on top of each other, and **in that** the visible range is illuminated by an illumination apparatus (22) of the camera (24) whose light is deflected via the mirror elements (12, 14) into the visible range.

## Revendications

1. Caméra (24) comprenant un dispositif (10) pour dévier et pour élargir la zone de vision de la caméra (24), ledit dispositif (10) comprenant un premier élément miroir (12) et un second élément miroir (14), qui sont basculés dans une direction longitudinale correspondant à l'axe optique de la caméra (24) et qui sont basculés l'un par rapport à l'autre, afin d'amener à la caméra (24) la lumière provenant d'une zone de vision située latéralement par référence à l'axe optique et pour couvrir avec les deux éléments miroir (12, 14) une largeur de champ de vision requise dans des zones partielles (34a-b) qui se complètent mutuellement,
**caractérisée en ce que**
le premier élément miroir (12) et le second élément miroir (14) sont agencés l'un à côté de l'autre sur un arbre (16), et **en ce que** les éléments miroir (12, 14) sont inclinés additionnellement l'un par rapport à l'autre dans une direction transversale perpendiculaire à la direction longitudinale, afin que les zones partielles (34a-b), situées l'une derrière l'autre dans la zone objet, soient couvertes l'une au-dessus de l'autre dans la caméra (24), dans laquelle la caméra (24) comprend un moyen d'éclairage (22), dont la lumière est déviée via les éléments miroir (12, 14) vers la zone de vision, afin d'éclairer la zone de vision.

2. Caméra (24) selon la revendication 1,
dans laquelle le premier élément miroir (12) et le second élément miroir (14) sont basculés en direction longitudinale de 20° à 70°, en particulier de 40° à 50°, où sensiblement de 45° par rapport à l'axe optique de la caméra (24).

3. Caméra (24) selon la revendication 1 ou 2,
dans laquelle le premier élément miroir (12) et le second élément miroir (14) sont basculés en direction transversale de la même valeur, mais dans des directions différentes.

4. Caméra (24) selon l'une des revendications précédentes,
dans laquelle le premier élément miroir (12) et le second élément miroir (14) forment des surfaces de miroir avec la même géométrie.

5. Caméra (24) selon l'une des revendications précédentes,
dans laquelle le dispositif (10) comprend un troisième élément miroir, qui est basculé en direction longitudinale et en direction transversale par rapport au premier élément miroir (12) et au second élément miroir (14).

6. Caméra selon l'une des revendications précédentes,
dans laquelle le dispositif (10) comprend un boîtier (18) avec un élément de liaison (20), au moyen duquel le dispositif (10) est relié de façon détachable avec la caméra (24) à titre de capot.

7. Caméra (24) selon l'une des revendications précédentes,
qui comprend une unité d'évaluation (30), afin de joindre une zone partielle (34a), enregistrée via le premier élément miroir (12), de la zone de vision, et une zone partielle (34b), enregistrée via le second élément miroir (14), de la zone de vision, pour donner une image commune du champ de vision élargi.

8. Caméra (24) selon l'une des revendications précédentes,
qui est réalisée à titre de lecteur de code basé sur une caméra, avec une unité de décodage (30), pour identifier des zones de code et pour lire des contenus codés.

9. Procédé pour enregistrer une image provenant d'une zone de vision élargie, avec une caméra (24), dans lequel la lumière provenant d'une zone de vision située latéralement par référence à l'axe optique est amenée à la caméra (24) via deux éléments miroir (12, 14), lesquels sont basculés dans une direction longitudinale correspondant à l'axe optique de la caméra (24) et sont basculés l'un par rapport à l'autre, afin de couvrir avec les deux éléments miroir (12, 14) une largeur de champ de vision requise, dans des zones partielles (34a-b) qui se complètent mutuellement,
**caractérisé en ce que**
les éléments miroir (12, 14) sont disposés l'un à côté de l'autre sur un arbre (16), et sont inclinés additionnellement l'un par rapport à l'autre dans une direction transversale perpendiculaire à la direction longitudinale, et **en ce que** dans l'image, les deux zones partielles (34a-b), situées l'une derrière l'autre dans la zone objet, sont enregistrées simultanément via les éléments miroir (12, 14) et disposées l'une au-dessus de l'autre, et **en ce que** la zone de vision est éclairée par un dispositif d'éclairage (22) de la caméra (24), dont la lumière est déviée via les éléments miroir (12, 14) vers la zone de vision.
